# EUROPEAN PATENT SPECIFICATION

(11) **EP 3 812 228 B1**
(45) Date of publication and mention of the grant of the patent: **13.03.2024**
(21) Application number: 19886728.5
(22) Date of filing: 28.06.2019
(51) Int. Cl.: B60W 30/06, B62D 15/02, G05D 1/00, G08G 1/16

(54) **AUTOMATIC PARKING METHOD AND SYSTEM**
AUTOMATISCHES EINPARKVERFAHREN UND -SYSTEM
PROCÉDÉ ET SYSTÈME DE STATIONNEMENT AUTOMATIQUE

(30) Priority: 20.11.2018 CN 201811389134
(43) Date of publication of application: 28.04.2021
(73) Proprietor: Guangzhou Xiaopeng Motors Technology Co., Ltd., Guangzhou, Guangdong 510000 (CN); Guangzhou Chengxing Zhidong Motors Technology Co., Ltd., Guangzhou, Guangdong 510700 (CN)
(72) Inventor: LIU, Zhongyuan, Guangzhou, Guangdong 510000 (CN); LI, Liang, Guangzhou, Guangdong 510000 (CN); ZHOU, Jian, Guangzhou, Guangdong 510000 (CN)
(74) Representative: Lin Chien, Mon-Yin
(86) International application number: PCT/CN2019/093441
(87) International publication number: WO 2020/103456

(56) References cited:
- EP-A1- 3 284 654
- DE-A1-102013 015 348
- US-A1- 2013 035 821
- US-A1- 2013 085 637
- US-A1- 2017 123 421

## Description

### TECHNICAL FIELD

The disclosure relates to field of vehicle technology, in particular to an automatic parking method and system, a vehicle and a computer-readable storage medium. The invention is set out in the appended set of claims.

### BACKGROUND

At present, automatic vehicles need to detect surrounding parking spaces first when the automatic vehicles are trying to park automatically. Only when an available parking space is detected, an automatic parking operation can be performed by the automatic vehicle. However, it has been found in practice that every time the vehicle parks into a common parking space (such as a diver's private parking space), the automatic vehicle needs to be driven to a vicinity of the common parking space. Only when the common parking space is detected, can the automatic vehicle be parked into the common parking space. Overall, the above-mentioned automatic parking method is not intelligent enough.

EP 3,284,654 A1 discloses a method for autonomously parking or un-parking a motor vehicle. In which, a map of a parking area having a first temporary obstruction zone is received, and a starting location of the motor vehicle relative to the parking area is determined. A destination location within the parking area is selected, the first temporary obstruction zone is set as operative or inoperative, and a path from the starting location to the destination location is generated. The path does not enter the first temporary obstruction zone when operative. The motor vehicle is driven autonomously along the path from the starting location of the motor vehicle to the destination location.

DE102013015348A1 discloses a method for operating a vehicle, according to the features of the preamble of claims 1 and 7, in particular for approaching a parking lot in a non-visible/remote parking zone by the vehicle. Specifically, when approaching the parking lot in the parking zone, it is identified whether the parking lot is a home parking lot or the parking zone is a home parking zone; in the case of an identified home parking lot or identified home parking zone and the approach of the vehicle to the identified home parking lot or to the identified home parking zone, captured environment data or driving data are stored or updated, where several trajectories for the at least one home parking lot or at least one home parking zone are determined and stored in a learning mode on the basis of the environmental data or driving data; in an operating mode when approaching the at least one home parking lot or the at least one home parking zone, possible drivable trajectories for selection and activation are output, or if only one of the trajectories determined is drivable, it is activated automatically.

### SUMMARY

An automatic parking method and system, a vehicle and a computer-readable storage medium are provided in embodiments of the present disclosure. The invention is set out in the appended set of claims.

Compared with prior art, the disclosure has the beneficial efforts as follows:
The pre-stored environment map of a common parking area is called when detecting that a vehicle is located in a common parking area. The current location of the vehicle in the environment map is acquired. The parking trajectory for the vehicle in the environment map is acquired. The vehicle is parked into a common parking space according to the current location and the parking trajectory. It is unnecessary for the driver of the vehicle to drive the vehicle to a vicinity of the common parking space, thus the automatic parking method is more intelligent.

### BRIEF DESCRIPTION OF THE DRAWINGS

In order to explain the technical solutions in the embodiments of the disclosure more clearly, the drawings used in the description of the embodiments are briefly introduced below. Obviously, the following drawings just illustrate some embodiments of the disclosure. For those skilled in the art, other drawings can be obtained based on these drawings without creative work.
FIG.1 is a flow diagram of an automatic parking method according to an example useful for understanding the invention but outside the scope of the invention as claimed;
FIG.2 is a flow diagram of an automatic parking method according to another embodiment of the present invention;
FIG.3 is a flow diagram of an automatic parking method according to another example useful for understanding the invention but outside the scope of the invention as claimed;
FIG.4 is a schematic diagram of an automatic parking system according to an example useful for understanding the invention but outside the scope of the invention as claimed;
FIG.5 is a schematic diagram of an automatic parking system according to another embodiment of the present invention;
FIG.6 is a schematic diagram of an automatic parking system according to yet another embodiment of the present invention;
FIG.7 is a schematic diagram of a vehicle electronic device according to an example useful for understanding the invention but outside the scope of the invention as claimed.

### DETAILED DESCRIPTION OF PREFERRED EMBODIMENTS

The technical solutions in embodiments of the present disclosure will be clearly and completely described below with reference to drawings

It should be noted that the intent of the terms "comprise" and "define" and any variations In this embodiments of the present disclosure is to cover non-exclusive inclusions. For example, a process, method, system, product, or device that comprise a series of steps or units is not limited to the listed steps or units, but optionally comprise unlisted steps or units, or optionally also comprise other steps or units inherent in these processes, methods, products or device.

The embodiment of the invention discloses an automatic parking method and system. The automatic parking method is intelligent. Detailed descriptions are given below.

### First embodiment

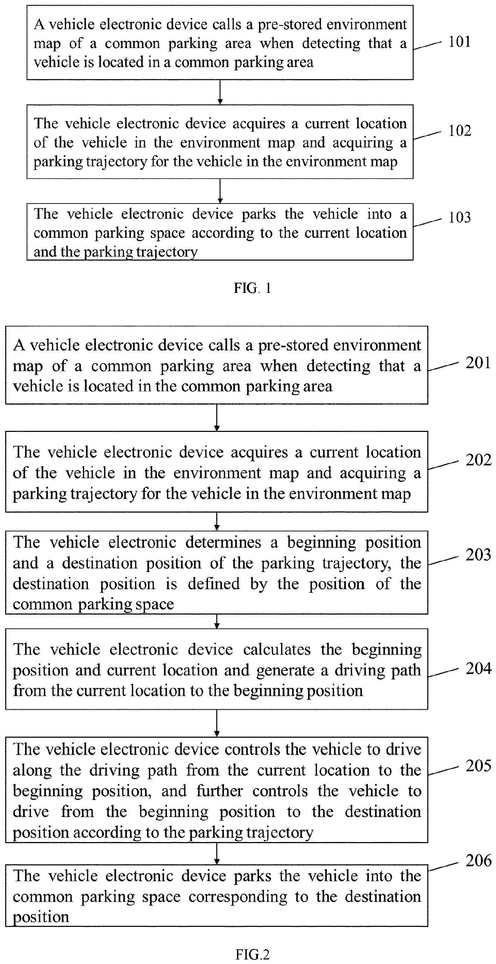

Referring to FIG. 1, FIG. 1 is a flow diagram of an automatic parking method according to an example useful for understanding the invention but outside the scope of the invention as claimed. The automatic parking method includes the following steps.

Step 101: a vehicle electronic device calls a pre-stored environment map of a common parking area when detecting that a vehicle is located in a common parking area.

In this embodiment, the vehicle electronic device can perform a real-time positioning on the vehicle via a global positioning system (GPS), thereby obtaining real-time GPS information of the vehicle. In this embodiment, the vehicle electronic device obtains a current location of the vehicle from the GPS information of the vehicle.

In this embodiment, the common parking area is a parking lot where a driver frequently parks, such as a community parking lot or a company parking lot. The driver's private parking space is located in the community parking lot or the company parking lot. When the driver parks in the common parking area for the first time, an image capturing device (such as a camera, etc.) installed on the vehicle can be provided to capture images of the common parking area. The captured images of the common parking area can be used to combine the environment map of the common parking area. The environment map and the common parking area are stored in a one-to-one correspondence. Thus a user can call the environment map directly from a storage or a server. In addition, the environment map can be a SLAM (Simultaneous Localization And Mapping) map constructed by using SLAM technology. The environment map may include road information, obstacle information, parking space information and vehicle information of the common parking areas. The vehicle information can be updated in real time, and the corresponding environment map can be updated in real time accordingly.

In this embodiment, the method for constructing the environment map may include the following operation. When it is detected that the vehicle switches from a stationary state to a driving state, the image capturing device can be turned on, and the image capturing device can capture images of a surrounding environment while the vehicle is driving. The environment map can be constructed based on the captured images by using SLAM technology. Because the environment map occupies a large memory capacity of a memory, a driving mileage corresponding to the stored environment map is preset in a limited range. In a typical application, the environment map with 1km latest mileage data can be stored. Data of the environment map over 1km latest mileage can be deleted, so that problem of insufficient memory space can be avoided. When it is detected that the vehicle switches from the driving state to the stationary state, as a current environment map with 1km latest mileage (around the parking spot) data is stored in the memory, so that the current environment map can be determined as the environment map of the common parking area.

In this embodiment, when the common parking area is any parking lot, the method for determining detailed information of the parking lot can be as follows. When GPS information of the vehicle is detected to disappear, location where the GPS information disappears can be determined. If the location is positioned in any parking lot, then information of the parking lot is obtained, and an area of the parking lot is determined as a common parking area. Furthermore, a driving track of the vehicle in the parking lot is obtained. Generally, the vehicle does not drive across an entire parking lot while driving in the parking lot, and the vehicle can only capture images of a partial area of the parking lot where the vehicle has passed by, thus an environmental image of the part area of the parking lot can be constructed based on the captured images.

The common parking area is an area including a common parking space.

In this embodiment, a scope of the area can be determined by a preset rule. In a typical example, the scope of the area may be determined by defining the common parking space as a center of a circle on a coordinate. The circle has a radius of preset length. The preset length may be a diagonal length of the common parking area. In this manner, determination of the common parking area is more convenient.

As an optional embodiment, before step 101, the following steps can be performed:
The vehicle electronic device acquires a current location of the vehicle and detects whether the current location is in any common parking area;
If the current location is in any common parking area, the vehicle electronic device performs step 101;
If the current location is not in any common parking area, the vehicle electronic device acquires environmental pictures of the current location of the vehicle, and determines a stopping position of the vehicle when the vehicle switches from a moving state to a stationary state. The vehicle electronic device further determines a current driving path of the vehicle in the parking area with the stopping position as a destination center and a preset distance as a radius. Furthermore, the vehicle electronic device acquires all the target environmental pictures corresponding to the current driving path to construct an environmental image of the parking area. In this manner, the environment image and the parking area are stored in a one-to-one correspondence. In this embodiment, the common parking area is part or all of the parking area. In other words, the parking area includes the common parking area.

In this embodiment, the parking area the driver parks for the first time can be determined, and the environment image corresponding to the parking area can be constructed and stored according to the environmental pictures obtained in advance. In this manner, the environmental image of the common parking area can be called quickly. In other words, speed of calling the environmental image is increased.

Step 102: the vehicle electronic device acquires a current location of the vehicle in the environment map and acquiring a parking trajectory for the vehicle in the environment map.

In this embodiment, the current location of the vehicle can be determined by GPS (Global Positioning System). The position of the vehicle determined by GPS is the position of the vehicle projected in a world coordinate system. The world coordinate system has a corresponding relationship with a coordinate system of the environment map. Therefore, the position of the vehicle in a world coordinate system can be transformed to and noted as a corresponding current location in the coordinate system of the environment map.

In this embodiment, every time the vehicle drives in a common parking area, at least one movement path of the vehicle in the common parking area is recorded. Fitting of the at least one movement path is performed by the vehicle electronic device to generate a final moving path. In this embodiment, the final moving path in the common parking area is recorded by using the world coordinate system, the final moving path is transformed to and noted as a parking trajectory according to the relationship between the environment map coordinate system and the world coordinate system.

Alternatively, since the vehicle can reach the common parking space through different parking trajectories in the common parking area, thus multiple parking trajectories with a common parking space as the parking trajectories' destination position can be determined from any common parking area. In this manner, a parking trajectory map can be generated based on the multiple determined parking trajectories. The parking trajectory map having multiple parking trajectories can be displayed. A background of the parking trajectory map is the environment map of the common parking area. In this manner, once the current location is determined, an optimal driving path from the current location to the common parking space can be generated according to the parking trajectory map.

Step 103, the vehicle electronic device parks the vehicle into a common parking space according to the current location and the parking trajectory.

In this embodiment, a beginning position and a destination position are determined according to the parking trajectory. The driving path is automatically programmed according to the current location of the vehicle and the destination position of the parking trajectory. In application, the path can be completely coincident with the parking trajectory, or partially coincident with the parking trajectory.

In this embodiment, since the vehicle can be detected as soon as it drives in the common parking area, it is considered that the vehicle is at a boundary of the common parking area. In addition, the current location of the vehicle and a beginning position of the parking trajectory are considered to be located at the boundary of the common parking area. A path from the current location of the vehicle to the beginning position of the parking trajectory is automatically programmed. In this manner, an entire path from the current location of the vehicle to the destination position is programmed. The automatic parking method in this embodiment reduces computation of the vehicle electronic device. The method does not need to directly calculate the entire path from the current location of the vehicle to the destination position, and only calculate the path from the current location of the vehicle (a point on the boundary of the common parking area) to the beginning position of the parking trajectory (a point on the boundary of the common parking area).

In the method described in Fig. 1, it is unnecessary for the driver of the vehicle to drive the vehicle to a vicinity of the common parking space, thus the automatic parking method is more intelligent. In addition, the method described in FIG. 1 can call the environmental image of the common parking area quickly. In other words, speed of acquiring environmental images can be increased. Furthermore, the method described in Figure 1 can reduce computation of the vehicle electronic equipment.

### Second Embodiment

Referring to FIG. 2, FIG. 2 a flow diagram of an automatic parking method according to another embodiment. The automatic parking method shown in FIG. 2 is optimized from the automatic parking method shown in FIG. 1. Compared with the automatic parking method of Fig. 1, the automatic parking method of Fig. 2 solves problem of how to automatically park the vehicle into a common parking space from a current location. In this embodiment, the method is provided to realize a complete automatic parking process in the common parking area. Intelligence of the vehicle's automatic parking function is improved. As in Figure 2, the automatic parking method includes the following steps.

Step 201: a vehicle electronic device calls a pre-stored environment map of a common parking area when detecting that a vehicle is located in the common parking area.

Step 202, the vehicle electronic device acquires a current location of the vehicle in the environment map and acquiring a parking trajectory for the vehicle in the environment map.

Step 203, the vehicle electronic determines a beginning position and a destination position of the parking trajectory, the destination position is defined by the position of the common parking space.

In this embodiment, the parking trajectory is a trajectory that starts to be recorded when the vehicle drives in the common parking area, and the parking trajectory is recorded until the vehicle is parked into the common parking space. Therefore, the beginning position of the parking trajectory is a point on a boundary of the common parking area, and the destination position of the parking trajectory is the common parking space in the common parking area.

After step 203, the vehicle electronic device further implement step:
The vehicle electronic device detects whether the current location of the vehicle is coincident with the parking trajectory.

If the current location of the vehicle is coincident with the parking trajectory, the vehicle electronic device confirms that the current location of the vehicle is the beginning position of the parking trajectory, and accordingly confirms the destination position of the parking trajectory. In addition, the vehicle electronic device controls the vehicle to drive from the beginning position of the parking trajectory to the destination position of the parking trajectory according to the parking trajectory, and controls the vehicle to park into the common parking space corresponding to the destination position of the parking trajectory.

If the current location of the vehicle is not coincident with the parking trajectory, the vehicle electronic device calculates a target position (on the parking trajectory) having a shortest distance from the current location to the parking trajectory, and accordingly generates a target path from the current location to the target position. In addition, the vehicle electronic device controls the vehicle to drive from the current location to the target position according to the target path. Furthermore, the vehicle electronic device controls the vehicle to drive from the target position to the destination position along the parking trajectory, and parks the vehicle into the common parking space corresponding to the destination position.

In this embodiment, a driving path of the vehicle can be determined according to the current location of the vehicle and the parking trajectory, so that the vehicle can drive to the destination position of the parking trajectory in a short time and park in the common parking space quickly.

Step 204, the vehicle electronic device calculates the beginning position and current location and generates a driving path from the current location to the beginning position.

In this embodiment, the vehicle electronic device automatically programs the driving path between the current location and the beginning position according to a position relationship between the beginning position of the parking trajectory and the current location in the environment map and road information between the beginning position and the current location. The program of the driving path should take a driving distance of the vehicle, road obstruction and driving time etc. into consideration. In this manner, an optimal driving path from the beginning position to the current location can be programed.

Step 205, the vehicle electronic device controls the vehicle to drive along the driving path from the current location to the beginning position, and further controls the vehicle to drive from the beginning position to the destination position according to the parking trajectory.

As an optional embodiment, after step 205, the vehicle electronic device may further perform the following steps:
the vehicle electronic device detects whether the common parking space corresponding to the destination position is available.
If the common parking space corresponding to the destination position is available, the vehicle electronic device performs step 206;
If the common parking space corresponding to the destination position is not available, the vehicle electronic device detects another available parking space in the common parking area. When another available parking space is detected, the vehicle electronic device controls the vehicle to park into the another available parking space.

In this manner, a state of the common parking space (available or unavailable) can be detected before the vehicle is parked into the common parking space, thus an accident that a vehicle parks into an unavailable common parking space can be avoided, and safety of automatic parking can be improved.

Step 206, the vehicle electronic device parks the vehicle into the common parking space corresponding to the destination position.

In this embodiment, by implementing the above steps 203 to 206, the vehicle is controlled to drive from the current location to the beginning position of the parking trajectory, and the vehicle is controlled to drive from the beginning position of the parking trajectory to the destination position. Overall, the vehicle can be parked into the common parking space automatically. Automatic parking in the common parking area is realized, and intelligence of automatic parking of vehicles is improved.

In the method described in FIG. 2, it is unnecessary for the driver of the vehicle to drive the vehicle to a vicinity of the common parking space, thus the automatic parking method is more intelligent. In addition, the method described in FIG. 2 allows the vehicle to arrive the destination position of the parking trajectory in a short time, so that the vehicle can be parked in a common parking space faster. Furthermore, an accident that a vehicle parks into an unavailable common parking space can be avoided, and safety of automatic parking can be improved. Moreover, the method described in FIG. 2 can realize an entire process's automatic parking in the common parking area, and safety of automatic parking of vehicles is increased.

### Third embodiment

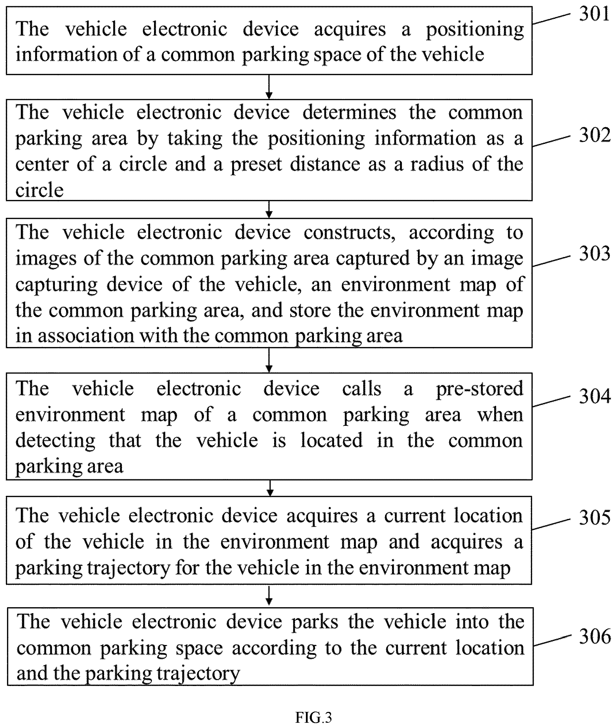

Referring to FIG. 3, FIG. 3 is a flow diagram of an automatic parking method according to another example useful for understanding the invention but outside the scope of the invention as claimed. The automatic parking method shown in FIG. 3 is optimized from the automatic parking method shown in FIG. 1. Compared with the automatic parking method shown in FIG. 1, the automatic parking method shown in FIG. 3 solves problem of how to determine a common parking area and improves accuracy of a vehicle's detection to a common parking area. As shown in Fig. 3, the automatic parking method includes the following steps.

Step 301, the vehicle electronic device acquires a positioning information of a common parking space of the vehicle.

In this embodiment, the positioning information of the common parking space can be acquired by GPS, and the positioning information of the common parking space can be positioning information projected in a world coordinate system.

As an optional manner, the method for the vehicle electronic device to acquire the positioning information of the common parking space may further comprise the following steps:
The vehicle electronic device acquires pre-stored parking spaces that the vehicle ever parked and acquires parking information of the parking space. The parking information at least comprises parking time.

The vehicle electronic device determines, from the pre-stored parking spaces, the common parking space with parking times thereof greater than a preset number.

The vehicle electronic device acquires the positioning information of the common parking space from the parking information of the common parking space.

In this manner, the method can acquire all the parking spaces that the driver parked, and count the parking times of each parking space, thereby determining the common parking space of the driver. The method can further obtain the positioning information of the common parking space, so that the vehicle can realize automatic parking according to the common parking space, and the driver's experience of automatic parking can be improved.

Step 302, the vehicle electronic device determines the common parking area by taking the positioning information as a center of a circle and a preset distance as a radius of the circle.

Step 303, the vehicle electronic device constructs, according to images of the common parking area captured by an image capturing device of the vehicle, an environment map of the common parking area, and stores the environment map in association with the common parking area.

In this embodiment, the vehicle electronic device can construct the environment map of the common parking area by using SLAM technology. While acquiring the image of the common parking area, the vehicle electronic device determines a conversion relationship between a camera coordinate system corresponding to the acquired images and the world coordinate system. In addition, the vehicle electronic device associates the environment map constructed by the images with the common parking area, and determines a current positioning of by using an Inertial Measurement Unit (IMU) while acquiring the image. Furthermore, the vehicle electronic device converts the current positioning of the vehicle into the camera coordinate system, thereby determining a driving track of the vehicle in the environment map. In this manner, the driving track of the vehicle in the environment map with the camera coordinate system and the driving track of the vehicle with the world coordinate system are correspondingly related.

In this embodiment, by implementing the above steps 301 to 303, a surrounding area of the common parking space of the driver of the vehicle can be determined as the common parking area, and the images of the common parking area can be collected to generate the environment map corresponding to the common parking area. When the vehicle drives into the common parking area, the environment map of the area can be directly called from a memory or a server. In this manner, a process of environmental recognition can be simplified, and efficiency of automatic parking can be increased.

Step 304, the vehicle electronic device calls a pre-stored environment map of a common parking area when detecting that the vehicle is located in the common parking area.

Step 305, the vehicle electronic device acquires a current location of the vehicle in the environment map and acquires a parking trajectory for the vehicle in the environment map.

As a manner, the vehicle electronic device acquires the current location of the vehicle in the environment map and acquires the parking trajectory for the vehicle in the environment map may comprise the following steps.

The vehicle electronic device acquires the current location of the vehicle in the environment map, and acquires at least one driving track of the vehicle in the common parking area. The positioning information of the driving track is a destination position of the driving track.
The vehicle electronic device combines the at least one driving track and generates a target driving track of the vehicle in the common parking area;
The vehicle electronic device analyzes the target driving track and environmental images, thereby acquiring, from the environmental images, the parking trajectory corresponding to the target driving track.

In this manner, all the driving tracks of the common parking space are obtained. The parking trajectories are combined to generate the target driving track. The target driving track is used to match with the environment map to acquire the final parking trajectory of the vehicle in the environment map. In this manner, the generated parking trajectory is ensured to be matched with the environment map, and the parking trajectory is more accurate.

Step 306, the vehicle electronic device parks the vehicle into the common parking space according to the current location and the parking trajectory.

In the method described in FIG. 3, it is unnecessary for the driver to drive the vehicle to a vicinity of the common parking space, thus the automatic parking method more intelligent. In addition, the method described in FIG. 3 can realize automatic parking according to the common parking space, thus the driver's experience of automatic parking can be improved. In addition, a process of environmental recognition can be simplified, and efficiency of automatic parking can be increased. In the method described in FIG. 3, the generated parking trajectory is ensured to be matched with the environment map, and the parking trajectory is more accurate.

### Fourth embodiment

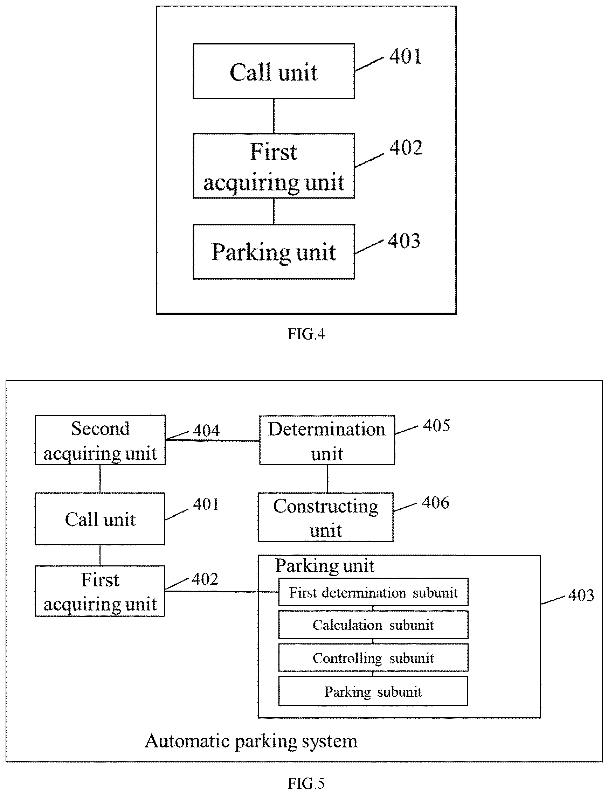

Referring to FIG.4 is a schematic diagram of an automatic parking system according to an example useful for understanding the invention but outside the scope of the invention as claimed. As shown in FIG. 4, the automatic parking system includes a call unit 401, a first acquiring unit 402, and a parking unit 403.

The call unit 401 is used to call a pre-stored environment map of a common parking area when detecting that the vehicle is located in the common parking area.

As an optional manner, the call unit 401 can also be used to:
acquire a current location of the vehicle and detects whether the current location is in any common parking area.

If the current location is in any common parking area, the call unit 401 is triggered to call a pre-stored environment map of the common parking area.

If the current location is not in any common parking area, environmental picture of the current location of the vehicle is acquired. A stopping position of the vehicle when the vehicle switches from a moving state to a stationary state is determined. A current driving path of the vehicle in the parking area with the stopping position as a destination center and a preset distance as a radius is further determined. Furthermore, all the target environmental pictures corresponding to the current driving path is acquired to construct an environmental image of the parking area. In this manner, the environment image and the parking area are store in a one-to-one correspondence. In this embodiment, the common parking area is part or all of the parking area. In other words, the parking area includes the common parking area.

In this embodiment, the parking area the driver parks for the first time can be determined, and the environment image corresponding to the parking area can be constructed and stored according to the environmental pictures obtained in advance. In this manner, the environmental image of the common parking area can be called quickly. In other words, speed of calling the environmental image is increased.

The first acquiring unit 402 is used to acquire a current location of the vehicle in the environment map called by the call unit 401, and to obtain a parking trajectory of the vehicle in the environment map.

The parking unit 403 is used to park the vehicle into a common parking space according to the current location and the parking trajectory acquired by the first acquiring unit 402.

In the automatic parking system described in FIG. 4, it is unnecessary for the driver of the vehicle to drive the vehicle to a vicinity of the common parking space, thus the automatic parking method is more intelligent. In addition, the automatic parking system described in FIG. 4 can call the environmental image of the common parking area quickly. In other words, speed of acquiring environmental images can be increased.

### Fifth embodiment

Referring to FIG. 5, FIG. 5 a schematic diagram of an automatic parking system according to another embodiment. The automatic parking system shown in FIG. 5 is optimized from the automatic parking system shown in FIG. 4. Compared with the automatic parking system of Fig. 4, the automatic parking system of Fig. 5 solves problem of how to automatically park the vehicle into a common parking space from a current location. In this embodiment, the system is provided to realize a complete automatic parking process in the common parking area. Intelligence of the vehicle's automatic parking function is improved. As in Figure 5, the parking unit 403 of the automatic parking system shown in FIG. 5 includes a first determination subunit 4301, a calculation subunit 4032, a control subunit 4033, and a parking subunit 4034.

The first determination subunit 4301 is used to determine a beginning position and a destination position of the parking trajectory, the destination position is defined by the position of the common parking space.

The first determination subunit 4301 is used to:
detect whether the current location of the vehicle is coincident with the parking trajectory;
If the current location of the vehicle is coincident with the parking trajectory, it is confirmed that the current location of the vehicle is the beginning position of the parking trajectory, and accordingly it is confirmed the destination position the parking trajectory. In addition, the vehicle is controlled to drive from the beginning position of the parking trajectory to the destination position of the parking trajectory according to the parking trajectory, and the vehicle is controlled to park into the common parking space corresponding to the destination position of the parking trajectory.

If the current location of the vehicle is not coincident with the parking trajectory, a target position (on the parking trajectory) having a shortest distance from the current location to the parking trajectory is calculated, and accordingly a target path from the current location to the target position is generated. In addition, the vehicle is controlled to drive from the current location to the target position according to the target path. Furthermore, the vehicle is controlled to drive from the target position to the destination position along the parking trajectory, and the vehicle is parked into the common parking space corresponding to the destination position.

In this embodiment, a driving path of the vehicle can be determined according to the current location of the vehicle and the parking trajectory, so that the vehicle can drive to the destination position of the parking trajectory in a short time and park in the common parking space quickly.

The calculation subunit 4032 is used to calculate the beginning position and the current location determined by the first determination unit 4031, and the calculation subunit 4032 is used to generate a driving path from the current location to the beginning position.

The control subunit 4033 is used to control the vehicle to drive from the current location to the beginning position along the driving path generated by the calculation subunit 4032. In addition, the control subunit 4033 is used to control the vehicle to drive from the beginning position to the destination position according to the parking trajectory.

As an optional manner, the control subunit 4033 may be further used to
detect whether the common parking space corresponding to the destination position is available.
If the common parking space corresponding to the destination position is available, the control subunit 4033 triggers the parking subunit 4034 to execute the step of parks the vehicle into the common parking space corresponding to the destination position that the control subunit 4033 controls the vehicle to arrive;
If the common parking space corresponding to the destination position is not available, the control subunit 4033 detects another available parking space in the common parking area. When another available parking space is detected, the control subunit 4033 controls the vehicle to park into the another available parking space.

In this manner, a state of the common parking space (available or unavailable) can be detected before the vehicle is parked into the common parking space, thus an accident that a vehicle parks into an unavailable common parking space can be avoided, and safety of automatic parking can be improved.

The parking subunit 4034 is used to park the vehicle into the common parking space corresponding to the destination position that the control subunit 4033 control the vehicle to arrive.

In this embodiment, by implementing the above steps 203 to 206, the vehicle is controlled to drive from the current location to the beginning position of the parking trajectory, and the vehicle is controlled to drive from the beginning position of the parking trajectory to the destination position. Overall, the vehicle can be parked into the common parking space automatically. Automatic parking in the common parking area is realized, and intelligence of automatic parking of vehicles is improved.

As an optional manner, the automatic parking system shown in FIG. 5 may further comprise a second acquiring unit 404, a determination unit 405, and a constructing unit 406.

The second acquiring unit 404 is used to acquire the positioning information of the common parking space of the vehicle before calling the pre-stored environment map of the common parking area when the call unit 401 detects that the vehicle is in the common parking area.

The determination unit 405 is used to determine the common parking area by taking the positioning information acquired by the second acquiring unit 404 as a center of a circle and a preset distance as a radius of the circle.

The constructing unit 406 is used to construct, according to images of the common parking area captured by an image capturing device of the vehicle and determined by the determination unit 405. In addition, the constructing unit 406 is used to construct the environment map of the common parking area, and store the environment map in association with the common parking area.

In this embodiment, a surrounding area of the common parking space of the driver of the vehicle can be determined as the common parking area, and the images of the common parking area can be collected to generate the environment map corresponding to the common parking area. When the vehicle drives into the common parking area, the environment map of the area is directly called from a memory or a server. In this manner, a process of environmental recognition can be simplified, and efficiency of automatic parking can be increased.

In this embodiment, by implementing the above automatic parking system, the vehicle is controlled to drive from the current location to the beginning position of the parking trajectory, and the vehicle is controlled to drive from the beginning position of the parking trajectory to the destination position. Overall, the vehicle can be parked into the common parking space automatically. Automatic parking in the common parking area is realized, and intelligence of automatic parking of vehicles is improved. In the system described in FIG. 5, it is unnecessary for the driver to drive the vehicle to a vicinity of the common parking space, thus the automatic parking method more intelligent. In addition, the automatic parking system described in FIG. 5 allows the vehicle to arrive the destination position of the parking trajectory in a short time, so that the vehicle can be parked in a common parking space faster. Furthermore, an accident that a vehicle parks into an unavailable common parking space can be avoided, and safety of automatic parking can be improved. Moreover, the automatic parking system described in FIG. 5 can realize an entire process's automatic parking in the common parking area, and intelligent of automatic parking of vehicles is increased. In the system described in FIG. 5, a process of environmental recognition can be simplified, and efficiency of automatic parking can be increased.

### Sixth Embodiment

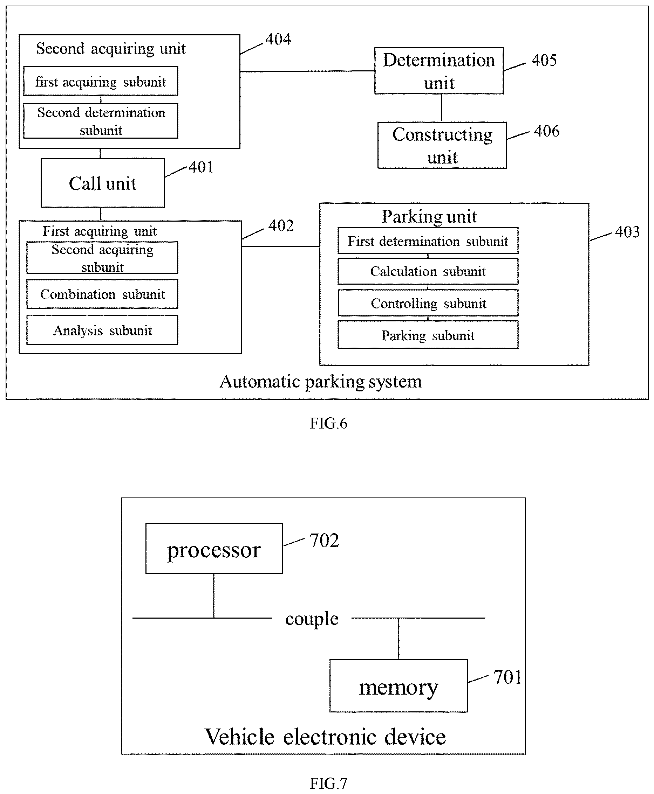

Referring to FIG. 6, FIG. 6 is a schematic diagram of another automatic parking system disclosed in the disclosure. The automatic parking system shown in FIG. 6 is optimized from the automatic parking system shown in FIG. 5. Compared with the automatic parking system shown in FIG. 5, the automatic parking system shown in FIG. 6 determines a common parking area by recording parking time that the vehicle parked in the parking space, so that the vehicle can detect the common parking area more accurately. A second acquiring unit 404 of the automatic parking system shown in FIG. 6 may comprise a first acquiring subunit 4041 and a second determination subunit 4042.

The first acquiring subunit 4041 is used to acquire pre-stored parking spaces and parking information of the pre-stored parking spaces before calling a pre-stored environment map of a common parking area when detecting that the vehicle is located in the common parking area. The pre-stored parking space is the one the vehicle has been parked. The parking information of the pre-stored parking space at least comprises parking time.

The second determination subunit 4042 is used to determine, from the pre-stored parking spaces, the common parking space with parking time greater than a preset number.

The first acquiring subunit 4041 is further used to acquire positioning information of the common parking space from the parking information of the common parking space determined by the second determination subunit 4042.

In this manner, the system can acquire all the parking spaces that the driver parked, and count the parking time of each parking space, thereby determining the common parking space of the driver. The system can further obtain the positioning information of the common parking space, so that the vehicle can realize automatic parking according to the common parking space, and the driver's experience of automatic parking can be improved.

As a manner, the first acquiring unit 402 of the automatic parking system illustrated in FIG.6 includes a second acquiring subunit 4021, a combination subunit 4022, and an analysis subunit 4023.

The second acquiring subunit 4021 is used to acquire the current location of the vehicle in the environment map, and acquire at least one driving track of the vehicle in the common parking area. The positioning information of the driving track is a destination position of the driving track.

The combination subunit 4022 is used to combine the at least one driving track and generate a target driving track of the vehicle in the common parking area.

The analysis subunit 4023 is used to analyze the target driving track and environmental images, thereby acquiring, from the environmental images, the parking trajectory corresponding to the target driving track.

In this manner, all the driving tracks of the common parking space are obtained. The parking trajectories are combined to generate the target driving track. The target driving track is used to match with the environment map to acquire the final parking trajectory of the vehicle in the environment map. In this manner, the generated parking trajectory is ensured to be matched with the environment map, and the parking trajectory is more accurate.

In the system described in FIG. 6, it is unnecessary for the driver to drive the vehicle to a vicinity of the common parking space, thus the automatic parking method more intelligent. In addition, the system described in FIG. 6 can realize automatic parking according to the common parking space, thus the driver's experience of automatic parking can be improved. In addition, a process of environmental recognition can be simplified, and efficiency of automatic parking can be increased. In the system described in FIG. 6, the generated parking trajectory is ensured to be matched with the environment map, and the parking trajectory is more accurate.

FIG.7 is a schematic diagram of a vehicle electronic device according to an example useful for understanding the invention but outside the scope of the invention as claimed. As shown in FIG.7, the vehicle electronic device may comprise a memory 701 and a processor 702.

The memory 701 has executable program codes stored therein.

The processor 702 is coupled to the memory.

The processor702 is used to call the executable program codes stored in the memory 701 and perform instructions for some or all steps of the automatic parking method of any one of embodiments described above.

In an embodiment, a vehicle having the vehicle electronic system mentioned above is provided.

In an embodiment, a computer-readable storage medium is provided. The computer-readable storage medium has program codes stored therein. The program codes comprise instructions for executing some or all steps of the automatic parking method of any embodiment described above.

A computer program product is provided, which is example useful for understanding the invention but outside the scope of the invention as claimed. The computer program product can be used to enable a computer to execute some or all steps of the automatic parking method of any one of embodiment describe above when the computer program product runs on the computer.

The "embodiment" mentioned throughout the disclosure means that a specific feature, structure, or characteristic related to the embodiment is included in at least one embodiment of the disclosure. Therefore, the appearance of "in this embodiment" throughout the specification does not necessarily refer to the same embodiment. In addition, these specific features, structures, or characteristics can be combined in one or more embodiments in any feasible manner.

In the various embodiments of the present disclosure, the sequence numbers of the aforementioned processes do not mean the necessary sequence of execution. The execution order of each process should be determined by its function and internal logic and should not limit the implementation process of the embodiments of the present disclosure.

In addition, the terms "system" and "network" in this disclosure are often used interchangeably. It should be understood that the term "and/or" in this disclosure is only an association relationship describing associated objects, indicating that there can be three types of relationships, such as A and/or B, which can mean: A alone exists, A and B exist at the same time, and B alone exists. In addition, the character "/" in this text generally indicates that the associated objects before and after are in an "or" relationship.

In the embodiments provided by the present disclosure, that "B corresponding to A" means that B is associated with A, and B can be determined according to A. However, it should also be understood that determining B according to A does not mean determining B only according to A, and B can also be determined according to A and/or other information.

Those of ordinary skill in the art can understand that all or part of the steps in the various methods of the above-mentioned embodiments can be completed by a program instructing relevant hardware. The program can be stored in a computer-readable storage medium. The storage medium includes read-only Memory (Read-Only Memory, ROM), Random Access Memory (RAM), Programmable Read-only Memory (PROM), Erasable Programmable Read Only Memory (Erasable Programmable Read Only Memory, EPROM), One-time Programmable Read-Only Memory (OTPROM), Electronically-Erasable Programmable Read-Only Memory (EEPROM), CD-ROM (Compact Disc) Read-Only Memory (CD-ROM) or other optical disk storage, magnetic disk storage, tape storage, or any other computer-readable medium that can be used to carry or store data.

The units described above as separate components may or may not be physically separate, and the components displayed as units may or may not be physical units and may be located in one place or distributed on multiple network units. Some or all of the units can be selected according to actual needs to achieve the purpose of the embodiment.

In addition, the functional units in the embodiments of the present disclosure may be integrated into one processing unit, or each unit may exist alone physically, or two or more units may be integrated into one unit. The above-mentioned integrated unit can be realized in the form of hardware or software functional unit.

If the above integrated unit is implemented in the form of a software functional unit and sold or used as an independent product, it can be stored in a computer-accessible memory. Based on this understanding, the essence of the technical solution of the present disclosure, the part that contributes to the existing technology, all or part of the technical solution can be embodied in the form of a software product, and the computer software product can be stored in a memory. Including several requests to make a computer device (which may be a personal computer, a server or a network device, etc., specifically a processor in a computer device) execute some or all of the steps of the above methods of the any embodiments of the present disclosure.

The above describes in detail an automatic parking method and system disclosed in the embodiments of the present disclosure. Specific examples are used in this article to illustrate the principles and implementations of the present disclosure. The description of the above embodiments is only used to help understand the present disclosure.

## Claims

1. An automatic parking method, comprising:
calling (101, 201, 304) a pre-stored environment map of a common parking area when detecting that a vehicle is located in the common parking area;
acquiring (102, 202, 305) a current location of the vehicle in the environment map and acquiring a parking trajectory for the vehicle in the environment map; and
parking (103, 306) the vehicle into a common parking space, according to the current location and the parking trajectory, wherein
parking times that the vehicle has been parked in the common parking space are greater than a preset number, the common parking area comprises the common parking space, and the current location of the vehicle is located at a boundary of the common parking area,
the acquiring a parking trajectory of the vehicle in the environment map, comprises:
acquiring at least one recorded driving track of the vehicle in the common parking area, a destination of the at least one recorded driving track being the common parking space;
combining the at least one driving track to generate a target driving track of the vehicle in the common parking area; and
matching the target driving track with the environment map to acquire the parking trajectory of the vehicle in the environment map, and wherein parking (103, 306) the vehicle into a common parking space according to the current location and the parking trajectory comprises:
determining (203) a beginning position and a destination position of the parking trajectory, the beginning position of the parking trajectory being located at the boundary of the common parking area, and the destination position being defined by a position of the common parking space;
**characterized in that** parking (103, 306) the vehicle into a common parking space according to the current location and the parking trajectory further comprises:
detecting whether the current location of the vehicle is coincident with the parking trajectory;
when it is detected that the current location of the vehicle is not coincident with the parking trajectory, calculating a target position on the parking trajectory having a shortest distance from the current location to the parking trajectory;
generating (204) a driving path from the current location of the vehicle to the target position of the parking trajectory;
controlling (205) the vehicle to drive along the driving path from the current location to the target position, and controlling the vehicle to drive along the parking trajectory from the target position to the destination position; and
parking (206) the vehicle into the common parking space corresponding to the destination position;
wherein
a driving mileage of the vehicle corresponding to the pre-stored environment map is preset in a limited range.

2. The method as claimed in claim 1, wherein the method further comprises:
when it is detected that the current location of the vehicle is coincident with the parking trajectory, determining the current position of the vehicle as the beginning position of the parking trajectory.

3. The method as claimed in claim 1 or claim 2, before calling (101, 201) a pre-stored environment map of a common parking area when detecting that a vehicle is located in the common parking area, the method further comprising:
acquiring (301) a position of the common parking space of the vehicle;
determining (302) the common parking area by taking the position as a center of a circle and a preset distance as a radius of the circle; and
constructing (303), according to images of the common parking area captured by an image capturing device of the vehicle, the environment map of the common parking area, and storing the environment map in association with the common parking area.

4. The method as claimed in claim 3, wherein the acquiring (301) a position of the common parking space of the vehicle, comprises:
acquiring pre-stored parking spaces where the vehicle has been parked, and acquiring parking information of the pre-stored parking spaces, the parking information at least comprising parking times;
determining, from the pre-stored parking spaces, the common parking space with parking times thereof greater than the preset number; and
acquiring the position of the common parking space from the parking information of the common parking space.

5. The method as claimed in claim 1, wherein the acquiring the current location of the vehicle comprises:
acquiring the current location of the vehicle from GPS information of the vehicle.

6. The method as claimed in claim 1, before parking (103, 306) the vehicle into the common parking space corresponding to the destination position, the method further comprising:
detecting whether the common parking space corresponding to the destination position is available.

7. An automatic parking system, comprising:
a call unit (401), configured to call a pre-stored environment map of a common parking area when detecting that the vehicle is located in the common parking area;
a first acquiring unit (402), configured to acquire the current location of the vehicle in the environment map and acquire a parking trajectory of the vehicle in the environment map; and
a parking unit (403), configured to park the vehicle into a common parking space according to the current location and the parking trajectory,
**characterized in that**,
parking times that the vehicle has been parked in the common parking space are greater than a preset number, the common parking area comprises the common parking space, and the current location of the vehicle is located at a boundary of the common parking area,
the first acquiring unit (402) comprises:
a second acquiring subunit (4021), configured to acquire at least one recorded driving track of the vehicle in the common parking area, a destination of the at least one recorded driving track being the common parking space;
a combination subunit (4022), configured to combine the at least one driving track to generate a target driving track of the vehicle in the common parking area; and
an analysis subunit (4023), configured to match the target driving track with the environment map to acquire the parking trajectory of the vehicle in the environment map, and
the parking unit (403) comprises:
a first determination subunit (4031), configured to: determine a beginning position and a destination position of the parking trajectory, the beginning position of the parking trajectory being located at the boundary of the common parking area, and the destination position being defined by a position of the common parking space; **characterized in that**:
- said first determination subunit (4031) is further configured to:
detect whether the current location of the vehicle is coincident with the parking trajectory; when it is detected that the current location of the vehicle is not coincident with the parking trajectory, calculate a target position on the parking trajectory having a shortest distance from the current location to the parking trajectory; and
**in that** the the parking unit further comprises:
a calculation subunit (4032), configured to generate a driving path from the current location of the vehicle to the target position of the parking trajectory;
a control subunit (4033), configured to control the vehicle to drive along the driving path from the current location to the target position, and control the vehicle to drive along the parking trajectory from the target position to the destination position; and
a parking subunit (4034), configured to park the vehicle into the common parking space corresponding to the destination position;
wherein
a driving mileage of the vehicle corresponding to the pre-stored environment map is preset in a limited range.

8. The automatic parking system according to claim 7, wherein the first determination subunit (4301) is further configured to:
when it is detected that the current location of the vehicle is coincident with the parking trajectory, determine the current position of the vehicle as the beginning position of the parking trajectory.

9. The automatic parking system according to claim 7 or claim 8, wherein the automatic parking system further comprises:
a second acquiring unit (404), configured to acquire, before calling the pre-stored environment map of the common parking area when detecting that the vehicle is located in the common parking area, a position of the common parking space of the vehicle;
a determination unit (405), configured to determine the common parking area by taking the position as a center of a circle and a preset distance as a radius of the circle; and
a construction unit (406), configured to construct, according to images of the common parking area captured by an image capturing device of the vehicle, the environment map of the common parking area, and store the environment map in association with the common parking area.

10. The automatic parking system according to claim 9, wherein the second acquiring unit (404) comprises:
a first acquiring subunit (4041), configured to acquire, before calling the pre-stored environment map of the common parking area when detecting that the vehicle is located in the common parking area, pre-stored parking spaces where the vehicle has been parked and parking information of the pre-stored parking spaces, wherein the parking information at least comprises parking times;
a second determination subunit (4021), configured to determine, from the pre-stored parking spaces, the common parking space with parking times thereof greater than the preset number; and
wherein the first acquiring subunit (4041) is further configured to acquire the position of the common parking space from the parking information of the common parking space.

11. The automatic parking system according to claim 7, wherein the control subunit (4033) is further used to detect whether the common parking space corresponding to the destination position is available.

12. A vehicle, comprising the vehicle electronic system of any one of claims 7 to 11.

13. A computer-readable storage medium, having program codes stored therein, wherein the program codes comprise instructions which, when being executed by a processor (702), cause the processor (702) to implement the automatic parking method of any one of claims 1 to 6.

## Patentansprüche

1. Verfahren zum automatischen Parken, umfassend:
Aufrufen (101, 201, 304) einer vorab gespeicherten Umgebungskarte eines gemeinsamen Parkplatzes, wenn erkannt wird, dass sich ein Fahrzeug in dem gemeinsamen Parkplatz befindet, Erfassen (102, 202, 305) eines aktuellen Standorts des Fahrzeugs in der Umgebungskarte und Erfassen einer Parktrajektorie für das Fahrzeug in der Umgebungskarte; und
Einparken (103, 306) des Fahrzeugs in einen gemeinsamen Parkplatz, entsprechend dem aktuellen Standort und der Parktrajektorie, wobei
die Parkzeiten, die das Fahrzeug auf dem gemeinsamen Parkplatz geparkt wurde, größer sind als eine voreingestellte Anzahl, der gemeinsame Parktrajektorie den gemeinsamen Parkplatz umfasst und der aktuelle Standort des Fahrzeugs sich an einer Grenze des gemeinsamen Parkbereichs befindet,
wobei das Erfassen einer Parktrajektorie des Fahrzeugs in der Umgebungskarte umfasst:
Erfassen mindestens einer aufgezeichneten Fahrspur des Fahrzeugs auf dem gemeinsamen Parkplatz, wobei ein Ziel der mindestens einen aufgezeichneten Fahrspur der gemeinsame Parkplatz ist; Kombinieren der mindestens einen Fahrspur, um eine Zielfahrspur des Fahrzeugs in dem gemeinsamen Parkplatz zu erzeugen; undAbgleichen der Zielfahrspur mit der Umgebungskarte, um die Parktrajektorie des Fahrzeugs in der Umgebungskarte zu erfassen, und wobei
das Einparken (103, 306) des Fahrzeugs in eine gemeinsame Parkplatz gemäß dem aktuellen Standort und der Parktrajektorie umfasst:
Bestimmen (203) einer Anfangsposition und einer Zielposition der Parktrajektorie, wobei die Anfangsposition der Parktrajektorie sich an der Grenze des gemeinsamen Parkplatzes befindet und die Zielposition durch eine Position des gemeinsamen Parkplatzes definiert ist;
**dadurch gekennzeichnet, dass** das Einparken (103, 306) des Fahrzeugs in einen gemeinsamen Parkplatz entsprechend dem aktuellen Standort und der Parktrajektorie weiterhin umfasst:
Erkennen, ob der aktuelle Standort des Fahrzeugs mit der Parktrajektorie übereinstimmt;
wenn erkannt wird, dass der aktuelle Standort des Fahrzeugs nicht mit der Parktrajektorie übereinstimmt, Berechnen einer Targetposition auf der Parktrajektorie mit der kürzesten Entfernung vom aktuellen Standort zur Parktrajektorie;Erzeugen (204) eines Fahrweges von der aktuellen Position des Fahrzeugs zu der Targetposition der Parktrajektorie; Steuern (205) des Fahrzeugs, um entlang des Fahrwegs von der aktuellen Position zu der Targetposition zu fahren, und Steuern des Fahrzeugs, um entlang der Parktrajektorie von der Targetposition zu der Zielposition zu fahren; undParken (206) des Fahrzeugs auf dem gemeinsamen Parkplatz, der der Zielposition entspricht;wobei eine Fahrleistung des Fahrzeugs, die der vorgespeicherten Umgebungskarte entspricht, in einem begrenzten Bereich voreingestellt ist.

2. Verfahren nach Anspruch 1, wobei das Verfahren ferner umfasst:
wenn erkannt wird, dass die aktuelle Position des Fahrzeugs mit der Parktrajektorie übereinstimmt, Bestimmen der aktuellen Position des Fahrzeugs als Anfangsposition der Parktrajektorie.

3. Verfahren nach Anspruch 1 oder Anspruch 2, wobei das Verfahren vor dem Aufrufen (101, 201) einer vorgespeicherten Umgebungskarte eines gemeinsamen Parkplatzes, wenn erkannt wird, dass sich ein Fahrzeug auf dem gemeinsamen Parkplatz befindet, ferner umfasst:
Erfassen (301) einer Position des gemeinsamen Parkplatzes des Fahrzeugs;
Bestimmen (302) der gemeinsamen Parkfläche, indem die Position als Mittelpunkt eines Kreises und ein vorgegebener Abstand als Radius des Kreises genommen wird Entfernung als Radius des Kreises; und
Erstellen (303) der Umgebungskarte des gemeinsamen Parkplatzes anhand von Bildern des gemeinsamen Parkplatzes, die von einer Bildaufnahmevorrichtung des Fahrzeugs aufgenommen wurden, und Speichern der Umgebungskarte in Verbindung mit dem gemeinsamen Parkplatz.

4. Verfahren nach Anspruch 3, wobei das Erfassen (301) einer Position des gemeinsamen Parkplatzes des Fahrzeugs umfasst:
Erfassen von vorgespeicherten Parkplätzen, auf denen das Fahrzeug geparkt wurde, und Erfassen von Parkinformationen der vorgespeicherten Parkplätze, wobei die Parkinformationen zumindest Parkzeiten umfassen;
Bestimmen des gemeinsamen Parkplatzes aus den vorgespeicherten Parkplätzen, dessen Parkzeiten größer als die voreingestellte Anzahl sind; und
Erfassen der Position des gemeinsamen Parkplatzes anhand der Parkinformationen des gemeinsamen Parkplatzes.

5. Verfahren nach Anspruch 1, wobei das Erfassen des aktuellen Standorts des Fahrzeugs umfasst:
Erfassen des aktuellen Standorts des Fahrzeugs aus GPS-Informationen des Fahrzeugs.

6. Verfahren nach Anspruch 1, wobei das Verfahren vor dem Einparken (103, 306) des Fahrzeugs auf dem gemeinsamen Parkplatz, der der Zielposition entspricht, ferner Folgendes umfasst:
Erkennen, ob der der Zielposition entsprechende gemeinsame Parkplatz verfügbar ist.

7. Ein automatisches Parksystem, umfassend:
eine Rufeinheit (401), die so konfiguriert ist, dass sie eine vorgespeicherte Umgebungskarte eines gemeinsamen Parkplatzes aufruft, wenn sie erkennt, dass sich das Fahrzeug in dem gemeinsamen Parkplatz befindet,
eine erste Erfassungseinheit (402), die so konfiguriert ist, dass sie den aktuellen Standort des Fahrzeugs in der Umgebungskarte erfasst und eine Parktrajektorie des Fahrzeugs in der Umgebungskarte erfasst; und
eine Parkeinheit (403), die so konfiguriert ist, dass sie das Fahrzeug entsprechend dem aktuellen Standort und der Parktrajektorie in einen gemeinsamen Parkplatz einparkt, **dadurch gekennzeichnet, dass**,
die Parkzeiten, zu denen das Fahrzeug auf dem gemeinsamen Parkplatz geparkt wurde, größer sind als eine voreingestellte Anzahl, der gemeinsame Parkplatz den gemeinsamen Parkplatz umfasst und der aktuelle Standort des Fahrzeugs sich an einer Grenze des gemeinsamen Parkplatzen befindet, die erste Erfassungseinheit (402) umfasst:
eine zweite Erfassungsuntereinheit (4021), die so konfiguriert ist, dass sie mindestens eine aufgezeichnete Fahrspur des Fahrzeugs in der gemeinsamen Parkplatz erfasst, wobei ein Ziel der mindestens einen aufgezeichneten Fahrspur der gemeinsame Parkplatz ist;eine Kombinationsuntereinheit (4022), die so konfiguriert ist, dass sie die mindestens eine Fahrspur kombiniert, um eine Zielfahrspur des Fahrzeugs in dem gemeinsamen Parkplatz zu erzeugen; undeine Analyseuntereinheit (4023), die so konfiguriert ist, dass sie die Zielfahrspur mit der Umgebungskarte abgleicht, um die Parktrajektorie des Fahrzeugs in der Umgebungskarte zu erfassen,
und die Parkeinheit (403) umfasst:
eine erste Bestimmungsuntereinheit (4031), die so konfiguriert ist, dass sie: eine Anfangsposition und eine Zielposition der Parktrajektorie bestimmt, wobei die Anfangsposition der Parktrajektorie an der Grenze des gemeinsamen Parkbereichs liegt und die Zielposition durch eine Position des gemeinsamen Parkplatzes definiert ist; **dadurch gekennzeichnet, dass**: die erste Bestimmungsuntereinheit (4031) ferner so konfiguriert ist, dass sie: erfasst, ob der aktuelle Standort des Fahrzeugs mit der Parktrajektorie übereinstimmt; wenn erkannt wird, dass der aktuelle Standort des Fahrzeugs nicht mit der Parktrajektorie übereinstimmt, eine Targetposition auf der Parktrajektorie zu berechnen, die eine kürzeste Entfernung vom aktuellen Standort zur Parktrajektorie aufweist; und dass die Parkeinheit ferner umfasst:eine Berechnungsuntereinheit (4032), die so konfiguriert ist, dass sie einen Fahrweg von dem aktuellen Standort des Fahrzeugs zu der Targetposition der Parktrajektorie erzeugt;eine Steueruntereinheit (4033), die so konfiguriert ist, dass sie das Fahrzeug so steuert, dass es entlang des Fahrwegs von der aktuellen Position zur Targetposition fährt, und das Fahrzeug so steuert, dass es entlang der Parktrajektorie von der Targetposition zur Zielposition fährt; undeine Parkuntereinheit (4034), die so konfiguriert ist, dass sie das Fahrzeug auf dem gemeinsamen Parkplatz einparkt, der der Zielposition entspricht;
wobei eine Fahrleistung des Fahrzeugs entsprechend der vorgespeicherten Umgebungskarte in einem begrenzten Bereich voreingestellt ist.

8. Automatisches Parksystem nach Anspruch 7, wobei die erste Bestimmungsuntereinheit (4301) ferner konfiguriert ist, um:
wenn erkannt wird, dass der aktuelle Standort des Fahrzeugs mit der Parktrajektorie übereinstimmt, die aktuelle Position des Fahrzeugs als Anfangsposition der Parktrajektorie zu bestimmen.

9. Automatisches Parksystem nach Anspruch 7 oder Anspruch 8, wobei das automatische Parksystem ferner umfasst:
eine zweite Erfassungseinheit (404), die so konfiguriert ist, dass sie vor dem Aufrufen der vorgespeicherten Umgebungskarte des gemeinsamen Parkplatzes, wenn sie erkennt, dass sich das Fahrzeug in dem gemeinsamen Parkplatz befindet, eine Position des gemeinsamen Parkplatzes des Fahrzeugs zu erfassen;
eine Bestimmungseinheit (405), die so konfiguriert ist, dass sie die gemeinsame Parkplatz bestimmt, indem sie die Position als Mittelpunkt eines Kreises und eine voreingestellte Entfernung als Radius des Kreises nimmt; und
eine Konstruktionseinheit (406), die so konfiguriert ist, dass sie anhand von Bildern des gemeinsamen Parkplatzes, die von einer Bildaufnahmevorrichtung des Fahrzeugs aufgenommen wurden, die Umgebungskarte des gemeinsamen Parkplatzes konstruiert und die Umgebungskarte in Verbindung mit dem gemeinsamen Parkplatz speichert.

10. Automatisches Parksystem nach Anspruch 9, wobei die zweite Erfassungseinheit (404) umfasst:
eine erste Erfassungsuntereinheit (4041), die so konfiguriert ist, dass sie vor dem Aufrufen der vorgespeicherten Umgebungskarte des gemeinsamen Parkplatzes, wenn sie erkennt, dass sich das Fahrzeug auf dem gemeinsamen Parkplatz befindet, vorgespeicherte Parkplätze, auf denen das Fahrzeug geparkt wurde, und Parkinformationen der vorgespeicherten Parkplätze erfasst, wobei die Parkinformationen zumindest Parkzeiten umfassen;
eine zweite Bestimmungsuntereinheit (4021), die so konfiguriert ist, dass sie aus den vorgespeicherten Parkplätzen ermittelt, den gemeinsamen Parkplatz zu bestimmen, dessen Parkzeiten größer als die voreingestellte Anzahl sind; und
wobei die erste Erfassungsuntereinheit (4041) ferner konfiguriert ist, um die Position des gemeinsamen Parkplatzes aus der Parkinformation des gemeinsamen Parkplatzes zu erfassen.

11. Automatisches Parksystem nach Anspruch 7, wobei die Steueruntereinheit (4033) weiterhin dazu dient, zu erkennen, ob der gemeinsame Parkplatz, der der Zielposition entspricht, verfügbar ist.

12. Ein Fahrzeug, das das elektronische Fahrzeugsystem nach einem der Ansprüche 7 bis 11 umfasst.

13. Computerlesbares Speichermedium mit darin gespeicherten Programmcodes, wobei die Programmcodes Anweisungen umfassen, die, wenn sie von einem Prozessor (702) ausgeführt werden, den Prozessor (702) veranlassen, das Verfahren zum automatischen Parken nach einem der Ansprüche 1 bis 6 zu implementieren.

## Revendications

1. Une méthode de stationnement automatique, comprenant :
appeler (101, 201, 304) une carte d'environnement pré-stocké d'une aire de stationnement commune lorsque l'on détecte qu'un véhicule se trouve dans l'aire de stationnement commune ;
acquir (102, 202, 305) d'un emplacement actuel du véhicule sur la carte de l'environnement et acquir une trajectoire de stationnement du véhicule sur la carte de l'environnement ; et
stationner (103, 306) le véhicule dans une place de stationnement commune, en fonction de l'emplacement actuel et de la trajectoire de stationnement, dans lequel
les temps de stationnement pendant lesquels le véhicule a été garé dans l'espace de stationnement commun sont supérieurs à un nombre prédéfini, l'aire de stationnement commune comprend l'espace de stationnement commun et l'emplacement actuel du véhicule est situé à une limite de l'aire de stationnement commune, l'acquisition d'une trajectoire de stationnement du véhicule dans la carte de l'environnement, comprend:
acquir au moins une trace de conduite enregistrée du véhicule dans l'aire de stationnement commune, une destination d'au moins une trace de conduite enregistrée étant l'espace de stationnement commun ;
combiner au moins une trace de conduite pour générer une trace de conduite cible du véhicule dans l'aire de stationnement commune ; et
faire correspondre la trace de conduite cible avec la carte de l'environnement pour acquérir la trajectoire de stationnement du véhicule dans la carte de l'environnement, et dans lequel
stationner (103, 306) le véhicule dans une place de stationnement commune en fonction de l'emplacement actuel et de la trajectoire de stationnement comprend:
déterminer (203) une position de départ et une position de destination de la trajectoire de stationnement, la position de départ de la trajectoire de stationnement étant située à la limite de l'aire de stationnement commune, et la position de destination étant définie par une position de l'aire de stationnement commune ;
**caractérisé en ce que** stationner (103, 306) le véhicule dans l'espace de stationnement commun en fonction de la position actuelle, et la trajectoire de stationnement comprend en outre:
détecter si l'emplacement actuel du véhicule coïncide avec la trajectoire de stationnement ;
lorsqu'il est détecté que l'emplacement actuel du véhicule ne coïncide pas avec la trajectoire de stationnement, calculer d'une position cible sur la trajectoire de stationnement ayant une distance la plus courte entre l'emplacement actuel et la trajectoire de stationnement ;
générer (204) un chemin de conduite entre l'emplacement actuel du véhicule et la position cible de la trajectoire de stationnement ;
contrôler (205) le véhicule pour qu'il roule le long du chemin de conduite de l'emplacement actuel à la position cible, et contrôler le véhicule pour qu'il conduise le long de la trajectoire de stationnement de la position cible à la position de destination ; et
stationner (206) le véhicule dans l'espace de stationnement commun correspondant à la position de destination ;
dans lequel un kilométrage parcouru par le véhicule correspondant à la carte d'environnement préenregistrée est prédéfini dans une plage limitée.

2. La méthode selon la revendication 1, dans lequel le procédé comprend en outre:
lorsqu'il est détecté que l'emplacement actuel du véhicule coïncide avec la trajectoire de stationnement, déterminer la position actuelle du véhicule comme position de départ de la trajectoire de stationnement.

3. La méthode selon la revendication 1 ou la revendication 2, avant d'appeler (101, 201) une carte d'environnement pré-stockée d'une aire de stationnement commune lors de la détection qu'un véhicule se trouve dans la zone de stationnement commune, le procédé comprenant en outre:
acquir (301) une position de l'espace de stationnement commun du véhicule ;
déterminer (302) l'aire de stationnement commune en prenant la position comme centre d'un cercle et une distance prédéfinie comme rayon du cercle ; et
construire (303), en fonction d'images de l'aire de stationnement commune capturées par un dispositif de capture d'images du véhicule, la carte de l'environnement de l'aire de stationnement commune, et stocker la carte de l'environnement en association avec l'aire de stationnement commune.

4. La méthode selon la revendication 3, dans lequel l'acquisition (301) d'une position de l'espace de stationnement commun du véhicule, comprend :
acquir des places de stationnement pré-stockées où le véhicule a été garé, et acquir des informations de stationnement sur les places de stationnement pré-stockées, les informations de stationnement comprenant au moins les temps de stationnement ;
déterminer, à partir des places de stationnement pré-stockées, l'espace de stationnement commun dont la durée de stationnement est supérieure au nombre prédéfini ; et
acquir la position de l'espace de stationnement commun à partir de l'information sur le parking de l'espace de stationnement commun.

5. La méthode selon la revendication 1, dans lequel l'acquisition de l'emplacement actuel du véhicule comprend :
acquir l'emplacement actuel du véhicule à partir des informations GPS du véhicule.

6. La méthode selon la revendication 1, avant de stationner (103, 306) le véhicule dans l'espace de stationnement commun correspondant à la position de destination, la méthode comprenant en outre:
détecter si l'espace de stationnement commun correspondant à la position de destination est disponible.

7. Un système de stationnement automatique, comprenant:
une unité d'appel (401), configurée pour appeler une carte d'environnement pré-stockée d'une aire de stationnement commune lorsqu'elle détecte que le véhicule se trouve dans l'aire de stationnement commune ;
une première unité d'acquisition (402), configurée pour acquérir l'emplacement actuel du véhicule dans la carte de l'environnement et acquérir une trajectoire de stationnement du véhicule dans la carte de l'environnement ; et
une unité de stationnement (403), configurée pour garer le véhicule sur une place de stationnement commune en fonction de l'emplacement actuel et de la trajectoire de stationnement,
**caractérisé en ce que**,
les temps de stationnement pendant lesquels le véhicule a été garé dans l'espace de stationnement commun sont supérieurs à un nombre prédéfini, l'aire de stationnement commune comprend l'espace de stationnement commun et l'emplacement actuel du véhicule est situé à une limite de l'aire de stationnement commune,
la première unité acquéreuse (402) comprend :
une deuxième sous-unité d'acquisition (4021), configurée pour acquérir au moins une trace de conduite enregistrée du véhicule dans l'aire de stationnement commune, un destination d'au moins une trace de conduite enregistrée étant l'espace de stationnement commun ;
une sous-unité combinée (4022), configurée pour combiner au moins une piste de conduite afin de générer une trajectoire cible du véhicule dans l'aire de stationnement commune ; et
une sous-unité d'analyse (4023), configurée pour faire correspondre la piste de conduite cible avec la carte de l'environnement afin d'acquérir la trajectoire de stationnement du véhicule dans la carte de l'environnement, et
l'unité de stationnement (403) comprend:
une première sous-unité de détermination (4031), configurée pour : déterminer une position de départ et une position d'arrivée de la trajectoire de stationnement, la position de départ de la trajectoire de stationnement étant située à la limite de l'aire de stationnement commune, et la position de destination étant définie par une position de l'aire de stationnement commune ;
**caractérisé en ce que** :
ladite la première sous-unité de détermination (4031) est en outre configurée pour :
détecter si l'emplacement actuel du véhicule coïncide avec la trajectoire de stationnement ; lorsqu'il est détecté que l'emplacement actuel du véhicule ne coïncide pas avec la trajectoire de stationnement, calculer une position cible sur la trajectoire de stationnement ayant une distance la plus courte entre l'emplacement actuel et la trajectoire de stationnement ; et
**en ce que** l'unité de stationnement comprend en outre :
une sous-unité de calcul (4032), configurée pour générer une trace de conduite de l'emplacement actuel du véhicule à la position cible de la trajectoire de stationnement ;
une sous-unité de commande (4033), configurée pour contrôler le véhicule pour qu'il roule le long de la trace de conduite de l'emplacement actuel à la position cible, et pour contrôler le véhicule pour qu'il conduise le long de la trajectoire de stationnement de la position cible à la position de destination ; et
une sous-unité de stationnement (4034), configurée pour garer le véhicule dans l'espace de stationnement commun correspondant à la position de destination ;
dans lequel un kilométrage parcouru par le véhicule correspondant à la carte d'environnement pré-stockée est prédéfini dans une plage limitée.

8. Le système de stationnement automatique selon la revendication 7, dans lequel la première sous-unité de détermination (4301) est en outre configurée pour :
lorsqu'il est détecté que l'emplacement actuel du véhicule coïncide avec la trajectoire de stationnement, déterminez la position actuelle du véhicule comme position de départ de la trajectoire de stationnement.

9. Le système de stationnement automatique selon la revendication 7 ou la revendication 8, dans lequel le système de stationnement automatique comprend en outre:
une deuxième unité d'acquisition (404), configurée pour acquérir, avant d'appeler la carte d'environnement pré-stockée de l'aire de stationnement commune lors de la détection que le véhicule se trouve dans l'aire de stationnement commune, une position de l'espace de stationnement commun du véhicule ;
une unité de détermination (405), configurée pour déterminer l'aire de stationnement commune en prenant la position comme centre d'un cercle et une distance prédéfinie comme rayon du cercle ; et
une unité de construction (406), configurée pour construire, en fonction des images de l'aire de stationnement commune capturées par un dispositif de capture d'images du véhicule, la carte de l'environnement de l'aire de stationnement commune, et stocker la carte de l'environnement en association avec l'aire de stationnement commune.

10. Le système de stationnement automatique selon la revendication 9, dans lequel la deuxième unité d'acquisition (404) comprend :
une première sous-unité d'acquisition (4041), configurée pour acquérir, avant d'appeler la carte d'environnement pré-stockée de l'aire de stationnement commune lors de la détection que le véhicule se trouve dans l'aire de stationnement commune, les places de stationnement pré-stockées où le véhicule a été garé et les informations de stationnement des places de stationnement pré-stockées, dans lesquelles les informations de stationnement comprennent au moins les temps de stationnement ;
une deuxième sous-unité de détermination (4021), configurée pour déterminer, à partir des places de stationnement pré-stockées, l'espace de stationnement commun dont la durée de stationnement est supérieure au nombre prédéfini ; et
dans lequel la première sous-unité acquéreuse (4041) est en outre configurée pour acquérir la position de l'espace de stationnement commun à partir des informations de stationnement de l'espace de stationnement commun.

11. Le système de stationnement automatique selon la revendication 7, dans lequel la sous-unité de commande (4033) est en outre utilisé pour détecter si l'espace de stationnement commun correspondant à la position de destination est disponible.

12. Un véhicule, comprenant le système électronique du véhicule de l'une quelconque des revendications 7 à 11.

13. Un support de stockage lisible par ordinateur, dans lequel sont stockés des codes de programme, dans lequel les codes de programme comprennent des instructions qui, lorsqu'elles sont exécutées par un processeur (702), amènent le processeur (702) à mettre en oeuvre la méthode de stationnement automatique de l'une quelconque des revendications 1 à 6.
